(19) Europäisches Patentamt
European Patent Office
Office européen des brevets

(11) Veröffentlichungsnummer: **0 038 296**
**B1**

# (12) EUROPÄISCHE PATENTSCHRIFT

(45) Veröffentlichungstag der Patentschrift: **09.05.84**

(21) Anmeldenummer: **81810119.8**

(22) Anmeldetag: **25.03.81**

(51) Int. Cl.³: **C 09 B 33/06,** C 07 C 87/50, C 07 C 103/44, C 07 C 143/58 // D06P1/39

## (54) Disazoverbindungen.

(30) Priorität: **31.03.80 CH 2538/80**

(43) Veröffentlichungstag der Anmeldung: **21.10.81 Patentblatt 81/42**

(45) Bekanntmachung des Hinweises auf die Patenterteilung: **09.05.84 Patentblatt 84/19**

(84) Benannte Vertragsstaaten: **CH DE FR GB IT LI**

(56) Entgegenhaltungen:
**CH - A - 540 863**
**CH - D - 1 020 269**
**FR - A - 1 577 114**
**US - A - 3 007 915**
**US - A - 3 069 408**
**US - A - 3 291 788**
**US - A - 3 912 712**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Schwander, Hansrudolf Dr., Unterm Schellenberg 189, CH-4125 Riehen (CH)**
Erfinder: **Hurter, Rudolf, Laufenburgerstrasse 10/3, CH-4058 Basel (CH)**

**EP 0 038 296 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Disazoverbindungen, Verfahren zu deren Herstellung sowie deren Verwendung als Farbstoffe zum Färben und Bedrucken von natürlichen und synthetischen Textilmaterialien vor allem von Polyamid- und Wollmaterialien.

Die neuen Disazoverbindungen entsprechen der Formel I

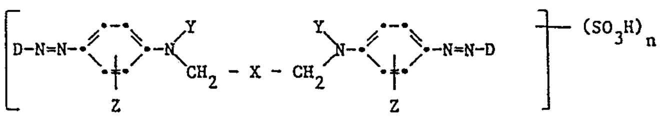

(I)

worin bedeuten
D unabhängig voneinander den Rest einer aromatischen oder heterocyclischen Diazokomponente, Z unabhängig voneinander Wasserstoff oder einen $C_1$-$C_4$-Alkylrest, oder einen Acylaminorest, Y Wasserstoff oder einen gegebenenfalls substituierten $C_1$-$C_6$-Alkylrest, X entweder die direkte Bindung oder $-CH_2-$, $-CH_2-\underset{CH_3}{CH}-CH_2-$, $-\overset{CH_3}{\underset{CH_3}{C}}-$, $-CH{=}CH-$, $-CH_2-O-CH_2$,

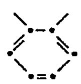 oder 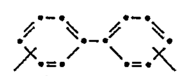 , und

n die Zahlen 2 bis 6, vorzugsweise 2, wobei der Substituent Y im Falle eines gegebenenfalls substituierten $C_1$-$C_6$-Alkylrestes auch mit der o-Stellung zum N-Atom des Phenylenrestes zu einem 6-Ring gebunden sein kann oder beide Y-Substituenten können miteinander zu einer Alkylenbrücke miteinander verbunden sein.

D in der Bedeutung eines Restes einer aromatischen oder heterocyclischen Diazokomponente stellt beispielsweise einen Phenyl- oder Naphthylrest oder einen Rest der Thiazol-, Thiophen-, Imidazol-, Pyridin-, Indazol-, Pyrazol-, Triazol-, Benztriazol-, Thiadiazol-, Isothiazol-, Benzthiazol- und Phthalsäureimidreihe dar. Diese Reste können ein oder mehrmals gleich oder verschieden substituiert sein. Als Substituenten kommen beispielsweise in Frage: CN; unverzweigte oder verzweigte $C_1$-$C_4$-Alkyl- und $C_1$-$C_4$-Alkoxygruppen; Halogen wie Fluor, Chlor oder Brom; die $CF_3$-Gruppe; die $SO_2$-Alkylgruppe wie die Methylsulfonyl-, Äthylsulfonyl-, n- und iso-Propylsulfonyl und n-, sek.- und tert.- Butylsulfonylgruppe; die $SO_2$-Arylgruppe wie die Phenylsulfonylgruppe oder Naphthylsulfonylgruppe, welche Gruppen im Phenyl-, bzw. Naphthylrest noch weitersubstituiert sein können, beispielsweise durch Alkyl, vor allem Methyl; die $SO_2NH_2$-Gruppe; die $SO_2N$-Alkyl-N-cyclohexylgruppe, wobei der Alkylrest 1 bis 4 Kohlenstoffatome aufweist, wie z.B. die $SO_2N$-Methyl-N-cyclohexylgruppe oder die $SO_2$-N-Propyl-N-cyclohexylgruppe, die $SO_2N(alkyl)_2$-Gruppe, worin die Alkylreste 1 bis 4 Kohlenstoffatome aufweisen, unverzweigt oder verzweigt und gegebenenfalls substituiert sein können, wie z.B. die Diäthylaminosulfonylgruppe oder die N-Methyl-N-äthylaminosulfonylgruppe; ferner kann es sich um die $SO_2NH$-R-Gruppe handeln, worin R einen Alkylrest mit 1 bis 8 Kohlenstoffatomen bedeutet, der gegebenenfalls substituiert ist, beispielsweise durch Phenyl, wobei es sich z.B. handelt um die Monoäthylaminosulfonylgruppe, n- und iso-Monobutylaminosulfonylgruppe, Monooctylaminosulfonylgruppe und Benzylaminosulfonylgruppe; des weiteren kann der Rest R noch eine Arylgruppe wie die Phenyl- oder Naphthylgruppe, oder die Cyclohexylgruppe oder die Gruppe Alkyl ($C_1$-$C_4$)-O-$SO_3H$ bedeuten. Des weiteren kommen als Substituenten im Rest D in Frage: die unsubstituierte Phenylgruppe oder eine durch Alkyl ($C_1$-$C_4$) vor allem $CH_3$ substituierte Phenylgruppe oder die Gruppe Alkyl ($C_1$-$C_4$)-O-$SO_3H$; schliesslich kann der Rest D noch durch eine faserreaktive Gruppe substituiert sein, vor allem durch eine Acylgruppe einer Carbonsäure, welche mindestens ein unter Färbebedingungen abspaltbares Halogenatom aufweist; es handelt sich z.B. um Chloracetylaminogruppen oder um α,β-Dibrompropionylaminogruppen oder α,β-Dichlorpropionylaminogruppen.

Ausser diesen genannten Substituenten können die aromatischen und heterocyclischen Reste D noch durch $SO_3H$-Gruppen substituiert sein, wobei diese Gruppen entweder direkt am aromatischen oder heterocyclischen Ring gebunden sind oder sich an einem der Substituenten befinden.

In bevorzugten Disazoverbindungen der Formel I stellt D den Rest einer aromatischen Diazokomponente, vor allem einen Phenylrest, dar, der durch Halogen insbesondere Chlor ein- oder mehrmals, und gegebenenfalls durch $SO_3H$ substituiert ist.

Z in der Bedeutung einer $C_1$-$C_4$-Alkylgruppe stellt eine unverzweigte oder verzweigte Alkylgruppe dar wie z.B. die Methyl-, Äthyl-, n-Propyl, iso-Propyl, n-, sek.- und tert.-Butylgruppe; in der Bedeutung einer Acylaminogruppe stellt Z vor allem die Acetylaminogruppe dar. In bevorzugten Azoverbindungen bedeutet Z den $CH_3$-Rest.

Das Brückenglied X kann die direkte Bindung bedeuten, was gleichzeitig die bevorzugte Bedeutung ist.

Handelt es sich beim Symbol Y um eine unsubstituierte $C_1$-$C_6$-Alkylgruppe, so kann diese unverzweigt oder verzweigt sein; beispielsweise sind als derartige Gruppen Y genannt: die Methyl-, Äthyl-, n-Propyl-, iso-Propyl-, n-Butyl-, sek.-Butyl-, tert.-Butyl- sowie die n- und iso-Pentyl- und n- und iso-Hexylgruppe. All diese Alkylgruppen Y können ausser durch die $SO_3H$-Gruppe noch weitersubstituiert sein durch z.B. eine OH-, CN-, -$OSO_3H$- oder Phenylgruppe. In bevorzugten Azoverbindungen der Formel I bedeutet Y eine unsubstituierte Alkylgruppe, insbesondere die $C_2H_5$-Gruppe.

Die Azoverbindungen der Formel I können symmetrischer Natur (bevorzugt), d.h. die beiden Symbole D und Z sind je identisch, oder asymmetrischer Natur sein. Handelt es sich um asymmetrische Verbindungen, so können z.B. die beiden Diazokomponenten D und/oder die beiden Substituenten Z verschiedener Natur sein, beispielsweise derart, dass die beiden Reste D identisch sind und ein Z Wasserstoff und das andere Z Methyl bedeutet.

Eine besonders interessante Azoverbindung vor allem infolge ihrer guten Nass- und Lichtechtheiten auf Polyamidmaterialien entspricht der Formel

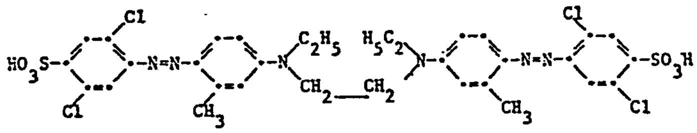

Weiterhin seien die Azoverbindungen der folgenden Formeln genannt, die auf Polyamidmaterialien ebenfalls Färbungen mit guten Nassechtheiten ergeben.

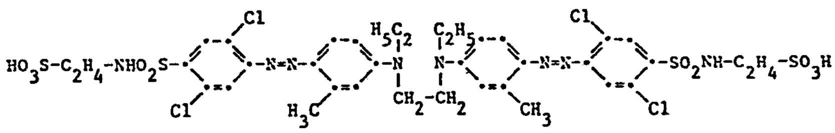

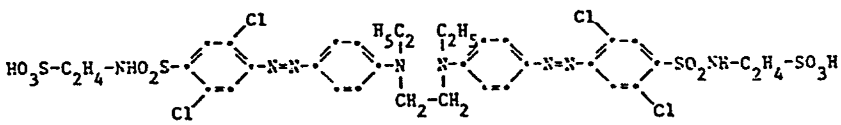

Die Azoverbindungen der Formel I sind gelbe bis rote Verbindungen, welche beispielsweise hergestellt werden können, indem man 2 Mol einer Diazokomponente der Formel II D-$NH_2$ mit 1 Mol einer Kupplungskomponente der Formel III

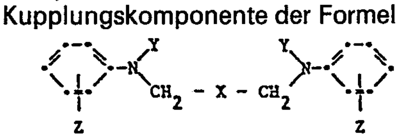 (III)

in welchen Formeln II und III die Symbole, D, Z, Y und X die unter Formel I angegebene Bedeutung haben, kuppelt, wobei die Azsgangsverbindungen II und III so gewählt werden, dass die erhaltenen Azoverbindungen der Formel I 2 bis 6 $SO_3H$-Gruppen enthalten, und/oder dass man Ausgangsverbindungen der Formeln II und III ohne $SO_3H$-Gruppen verwendet und nach der Kupplungsreaktion das Kupplungsprodukt sulfiert.

Die Diazokomponenten der Formel II sind bekannt; es handelt sich beispielsweise um folgende Verbindungen

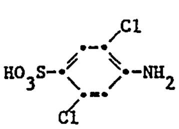 , 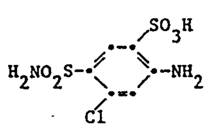

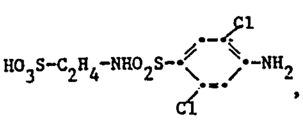 , 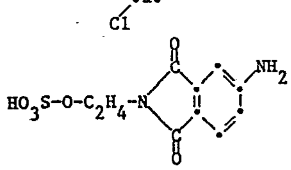

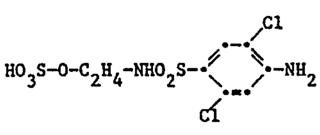 , 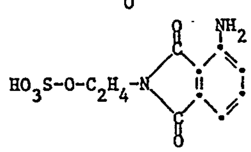

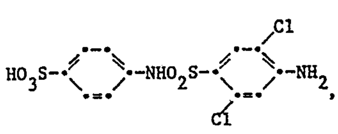 , 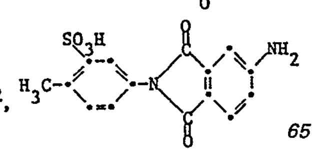

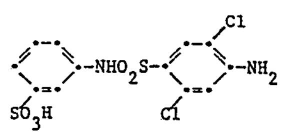 , 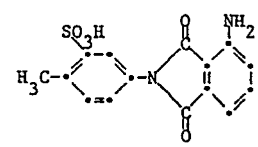

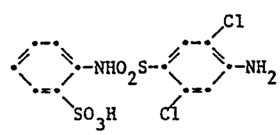 , 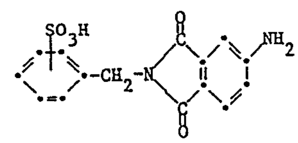

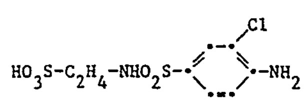 , 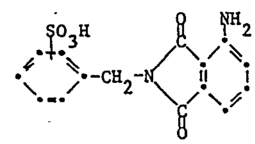

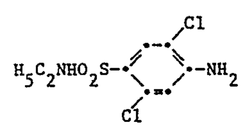 , 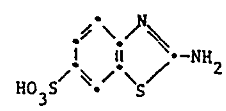

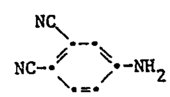

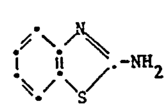

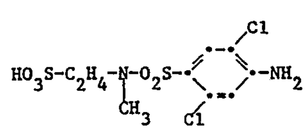

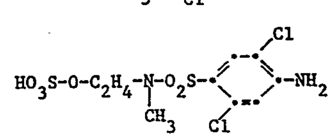

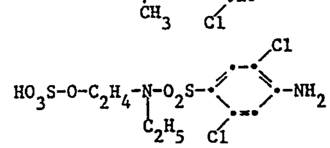

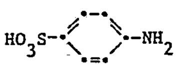, 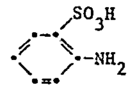, 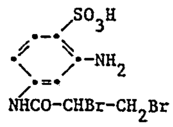

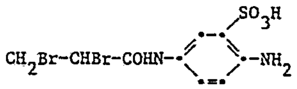, 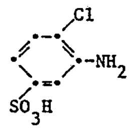

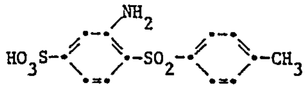.

Bevorzugt werden solche Diazokomponenten D eingesetzt, die sich von einer aromatischen Diazokomponente vor allem von einem Phenylrest, der durch Halogen ein- oder mehrmals, und gegebenenfalls durch $SO_3H$ substituiert ist, ableiten.

Die Kupplungskomponenten der Formel III und zwar sowohl diejenigen mit und ohne einer $SO_3H$-Gruppe sind grösstenteils neu. Als derartige Kupplungskomponenten sind z.B. genannt

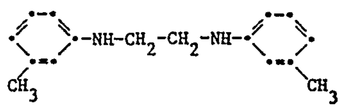

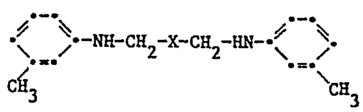

[X = $-CH_2-$

$-CH_2-CH(CH_3)-CH_2-$

$-C(CH_3)_2-$

$-CH=CH-$

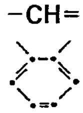

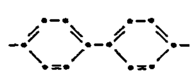

$-CH_2-O-CH_2-$]

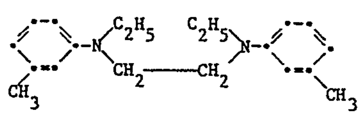

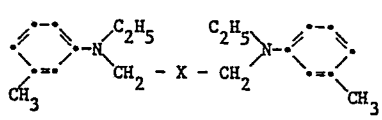

[X = $-CH_2-$

$-CH_2-CH(CH_3)-CH_2-$

$-C(CH_3)_2-$

$-CH=CH-$

$-CH_2-O-CH_2-$

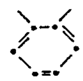

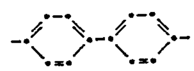 ]

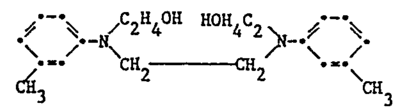

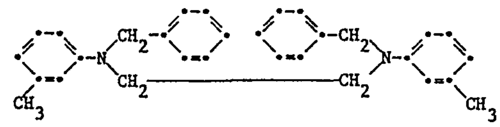

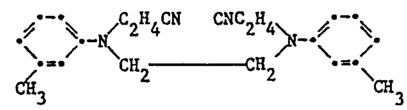

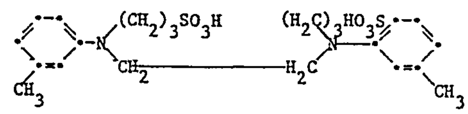

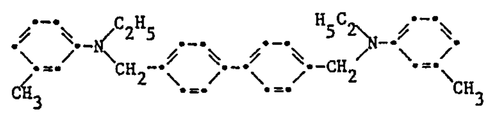

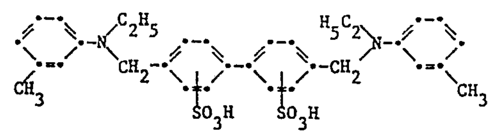

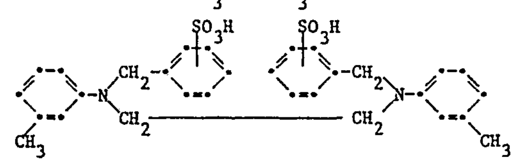

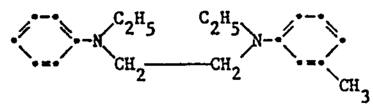

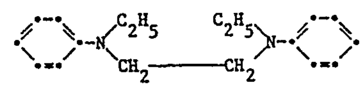

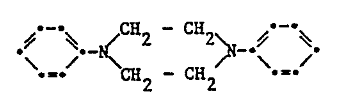

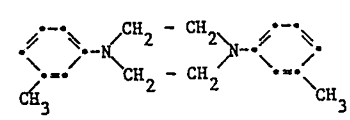

Bevorzugt werden solche Kupplungskomponenten der Formel III verwendet, worin Z einen $C_1$-$C_4$-Alkylrest, insbesondere die $CH_3$-Gruppe, X die direkte Bindung und Y eine unsubstituierte

$C_1$-$C_6$-Alkylgruppe, insbesondere die $C_2H_5$-Gruppe darstellt.

Die Verbindungen der Formel III können nach verschiedenen Varianten erhalten werden, z.B. derart, dass man 2 Mol eines Amins der Formel

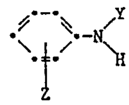

mit 1 Mol einer Dihylogenverbindung der Formel

$$Hal\text{-}CH_2\text{-}X\text{-}CH_2\text{-}Hal$$

worin Z, Y und X die unter Formel I angegebene Bedeutung haben, und Hal ein Halogenatom bedeutet, nach bekannter Art und Weise kondensiert.

Eine andere Möglichkeit der Darstellung, vor allem für Verbindungen der Formel III, worin Y gegebenenfalls substituiertes Alkyl bedeutet, besteht darin, dass man eine Verbindung der Formel

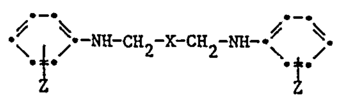

mit einer die Gruppe Y einführenden Verbindung nach bekannter Art und Weise alkyliert, oder kondensiert.

Handelt es sich bei den Verbindungen der Formel III, bezogen auf den Substituenten Z um asymmetrische Verbindungen, so können diese Verbindungen z.B. auch derart hergestellt werden, dass man ein Gemisch von Aminen der Formel

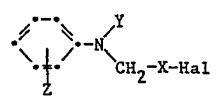

und

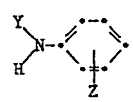

worin Z, Y und X die unter Formel I angegebene Bedeutung und Hal ein Halogenatom darstellt, kondensiert.

Für den Fall, dass in der Formel III die beiden Y-Substituenten miteinander zu einer Alkylenbrücke verbunden sind, so können diese Verbindungen nach der Arbeitsweise im „J. Amer. Chem. Soc.", *40*, 1429 (1918) hergestellt werden.

Die auf diese Weise erhaltenen Verbindungen der Formel III können noch sulfoniert werden z.B. mittels Oleum oder Chlorsulfonsäure.

Die Kupplungsreaktion der Verbindung II mit der Verbindung III erfolgt nach bekannter Art und Weise.

Die Erfindung betrifft des weiteren somit auch die neuen Zwischenprodukte der Formel IV

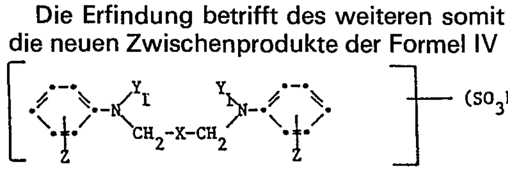

(IV)

worin bedeuten: Z unabhängig voneinander Wasserstoff oder einen $C_1$-$C_4$-Alkylrest oder eine Acylaminogruppe, $Y_1$ Wasserstoff oder einen gegebenenfalls substituierten $C_1$-$C_6$-Alkylrest, X entweder die direkte Bindung

oder $-CH_2-$, $-CH_2-CH-CH_2-$, $CH_3$
　　　　　　　　|　　　　　　|
　　　　　　　$CH_3$　　　$-C-$,
　　　　　　　　　　　　　　|
　　　　　　　　　　　　　$CH_3$

$-CH=CH-$, 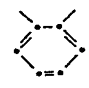 oder 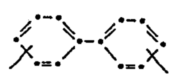 , und

m die Zahlen 0-2, wobei der Substituent $Y_1$ im Falle eines gegebenenfalls substituierten $C_1$-$C_6$-Alkylrestes auch an die o-Stellung zum N-Atom des Phenylrestes zu einem 6-Ring gebunden sein kann.

Verwendung finden die neuen Zwischenprodukte der Formel IV als Kupplungskomponenten zur Herstellung von vor allem Azoverbindungen der Formel I, welche ihrerseits als Farbstoffe zum Färben und Bedrucken von Textilmaterialien, welche mit anionischen Farbstoffen färbbar sind, vor allem Polyamidmaterialien und Wolle, aber auch Cellulosematerialien wie z.B. Baumwolle, angewendet werden können. Das Färben kann nach beliebigen, für das entsprechende Substrat geeigneten, kontinuierlichen oder diskontinuierlichen Methoden (z.B. Auszieh-, Klotz- oder Druckverfahren) erfolgen. Mit den erfindungsgemässen Azofarbstoffen werden Ausfärbungen erhalten, die gute Allgemeinechtheiten vor allem auf Polyamid- und Wollmaterialien aufweisen wie vor allem einen guten Farbstoffaufbau, sehr gute Nassechtheiten (Schweissechtheit, Waschechtheit und Heisswasserechtheit), gute Lichtechtheiten, gute Formaldehydbeständigkeit und Hydrolysenstabilität; schliesslich besitzen die neuen Azofarbstoffe noch einen hohen Ausziehgrad unabhängig vom Hilfsmittelzusatz.

Die zu färbenden Textilmaterialien können dabei in den verschiedensten Verarbeitungsformen wie Gewirke, Gewebe, Garne und Fasern sowie fertigen Artikeln, wie Hemden, vorliegen.

Aus der FR-PS 1577114 ist ein ähnlicher Tetrazofarbstoff bekannt, der jedoch nicht alle guten Eigenschaften der erfindungsgemässen Disazofarbstoffe aufweist.

In den nachfolgenden Beispielen, die der Erläuterung der Erfindung dienen, bedeuten Teile, sofern nichts anderes angegeben wird, Gewichtsteile, Prozente, Gewichtsprozente und die Temperaturen sind in Celsiusgraden angegeben. Anstelle der freien Säureform $-SO_3H$ können auch bei anionischen Farbstoffen übliche Kationen in der Form $-SO_3^{\ominus}M^{\oplus}$ treten, worin M z.B. für Alkalimetall, Lithium, Natrium, Kalium, Ammonium, Mono-, Di- und Tri-($C_2$-$C_3$-alkanol)ammonium oder Mono-, Di-, Tri- oder Tetra-($C_1$-$C_4$-alkyl)-ammonium steht.

*Beispiel 1:*

Man rührt ein Gemisch, bestehend aus 321 g m-Toluidin, 94 g 1,2-Dibromäthan und 40 g Magnesiumoxyd während 12 Stunden bei einer Temperatur von 100-102° und anschliessend noch 2 Stunden bei 123-125°, worauf man 300 ml Isopropanol und 10 g eines Filterhilfsmittels (Diatomeenerde) zugibt und durch eine Nutsche klärt. Der Filterrückstand wird mit 200 ml heissem Isopropanol nachgewaschen, die Filtrate vereinigt und anschliessend im Vakuum das Isopropanol und der m-Toluidinüberschuss entfernt. Als Rückstand hinterbleibt das Produkt der Formel

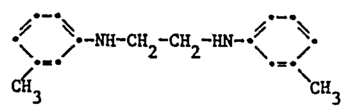

als zähflüssiges Öl.

Verwendet man, bei ansonst gleichem Vorgehen, anstelle von Dibromäthan die in der folgenden Tabelle 1 unter Kolonne I aufgeführten Dihalogen-Verbindungen, so erhält man die unter Kolonne II aufgeführten Produkte.

*Tabelle 1*

| I | | II |
|---|---|---|
| | | 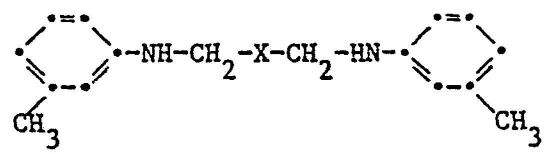 |
| Nr. | Dihalogen-Verbindung | X |
| 2 | $Br-CH_2-CH_2-CH_2-Br$ | $-CH_2-$ |
| 3 | $Br-CH_2-CH_2-CH(CH_3)-CH_2-CH_2-Br$ | $-CH_2-CH(CH_3)-CH_2-$ |
| 4 | $Br-CH_2-C(CH_3)_2-CH_2-Br$ | $-C(CH_3)_2-$ |
| 5 | $Br-CH_2-CH{=}CH-CH_2-Br$ | $-CH{=}CH-$ |
| 6 | 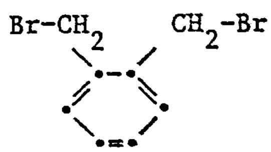 | 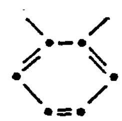 |
| 7 | 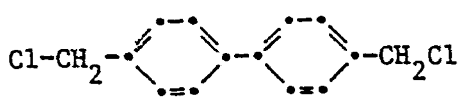 | 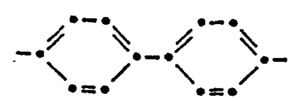 |
| 8 | $Br-CH_2-CH_2-O-CH_2-CH_2-Br$ | $-CH_2-O-CH_2-$ |

*Beispiel 9:*

Man rührt ein Gemisch, bestehend aus 120 g der Verbindung der Formel

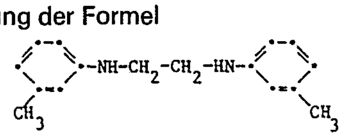

170 g Diäthylsulfat, 44 g Magnesiumoxyd und 500 ml Äthylenglykolmonoäthyläther während 6 Stunden bei einer Temperatur von 100°, worauf man 10 g Filterhilfsmittel zugibt und durch eine Nutsche klärt. Den Filterrückstand wäscht man mit insgesamt 100 ml heissem Äthylenglykolmonoäthyläther nach, worauf man aus den vereinigten Filtraten das Lösungsmittel im Vakuum entfernt. Man nimmt den Rückstand in 400 ml Toluol auf und schüttelt im Scheidetrichter dreimal mit je 80 ml 0,5N-Natronlauge aus, worauf man mit Wasser neutral wäscht. Man trocknet die organische Phase über Magnesiumsulfat, entfernt das Toluol im Vakuum und unterwirft den Rückstand einer fraktionierten Destillation im Feinvakuum. Man erhält das Produkt der Formel

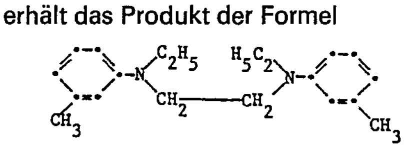

*Elementaranalyse:*

| | | | |
|---|---|---|---|
| ber.: | C 81,03 | H 9,52 | N 9,45% |
| gef.: | C 81,22 | H 9,54 | N 9,34% |

als zähflüssiges Öl. Kp. 0,4 mmHg/158-169°.

Verwendet man, bei ansonst gleichem Vorgehen, anstelle des oben aufgeführten Edukts äquivalente Mengen der in Tabelle 1 unter II aufgeführten Verbindungen 2-5 und 8, so erhält man die entsprechenden Verbindungen der Formeln

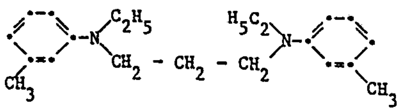

Kp. 0,1 mmHg/73°

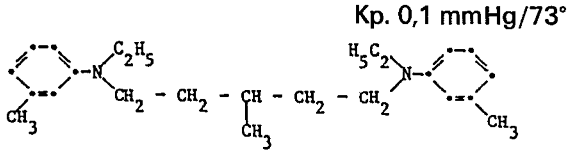

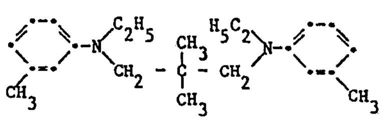

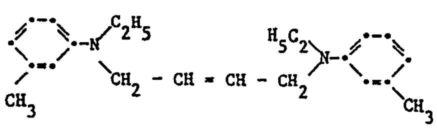

Kp. 0,7 mmHg/184-188°

*Elementaranalyse:*

| | | | |
|---|---|---|---|
| ber.: | C 81,34 | H 9,38 | N 8,63% |
| gef.: | C 82,01 | H 9,64 | N 8,71% |

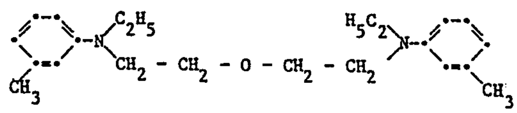

*Beispiel 10:*

Man rührt ein Gemisch, bestehend aus 270 g N-Äthyl-m-toluidin, 94 g 1,2-Dibromäthan und 40 g Magnesiumoxyd während 12 Stunden bei einer Temperatur von 100-105° und anschliessend noch 2 Stunden bei 123-125°, worauf man mit 300 ml Isopropanol verdünnt und nach Zugabe von 10 g Filterhilfsmittel durch eine Nutsche klärt. Man wäscht den Filterrückstand mit 200 ml heissem Isopropanol nach, vereinigt die Filtrate und entfernt anschliessend das Isopropanol im Vakuum. Den Rückstand unterwirft man einer fraktionierten Destillation im Feinvakuum, wobei sich das mit Beispiel 9 identische Produkt der Formel

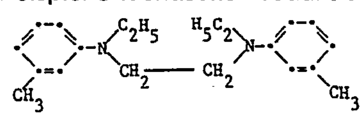

als zähflüssiges Öl isolieren lässt.

Verwendet man, bei ansonst gleichem Vorgehen, anstelle von Dibromäthan die in der folgenden Tabelle 2 unter Kolonne I aufgeführten Dihalogen-Verbindungen in äquivalenter Menge, so erhält man die unter Kolonne II aufgeführten Verbindungen.

*Tabelle 2*

| I | | II |
|---|---|---|
| | | 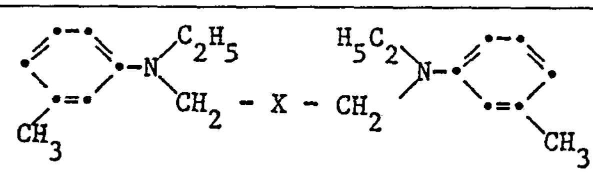 |
| Nr. | Dihalogen-Verbindung | X |
| 11 | $Br-CH_2-CH_2-CH_2-Br$ | $-CH_2-$ |
| 12 | $Br-CH_2-CH_2-CH-CH_2-CH_2-Br$<br>\|<br>$CH_3$ | $-CH_2-CH-CH_2-$<br>\|<br>$CH_3$ |
| 13 | $CH_3$<br>\|<br>$Br-CH_2-C-CH_2-Br$<br>\|<br>$CH_3$ | $CH_3$<br>\|<br>$-C-$<br>\|<br>$CH_3$ |
| 14 | $Cl-CH_2-CH=CH-CH_2-Cl$ | $-CH=CH-$ |
| 15 | 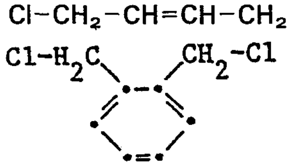 | 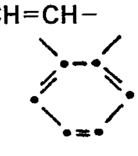 |
| 16 | 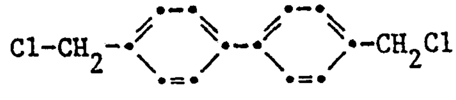 | 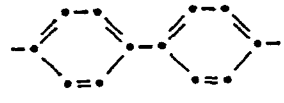 |
| 17 | $Cl-CH_2-CH_2-O-CH_2-CH_2-Cl$ | $-CH_2-O-CH_2-$ |

*Beispiel 18:*

Man rührt ein Gemisch, bestehend aus 120 g der Verbindung der Formel

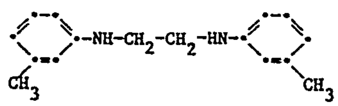

138 g 2-Bromäthanol und 40 g Magnesiumoxyd während 12 Stunden bei einer Temperatur von 120-122°, worauf man 300 ml Isopropanol und 10 g Filterhilfsmittel zugibt und durch eine Nutsche klärt. Den Filterrückstand wäscht man mit insgesamt 200 ml heissem Isopropanol nach, worauf man aus den vereinigten Filtraten das Isopropanol im Vakuum abdestilliert. Den Rückstand unterwirft man einer fraktionierten Destillation im Feinvakuum, wobei sich das Produkt der Formel

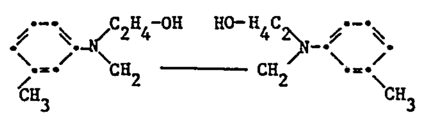

als zähflüssiges Öl abtrennen lässt.

Verwendet man bei ansonst gleichem Vorgehen anstelle des oben aufgeführten Eduktes äquivalente Mengen der Verbindung der Formel

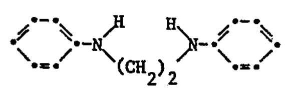

so erhält man das Produkt der Formel

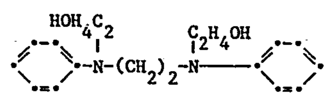

Fp. 68°.

Verwendet man bei sonst gleichem Vorgehen anstelle von Bromäthanol äquivalente Mengen Benzylchlorid, so erhält man die Verbindungen der Formeln

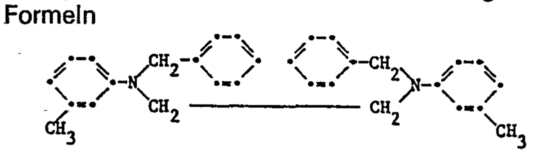

,

beziehungsweise

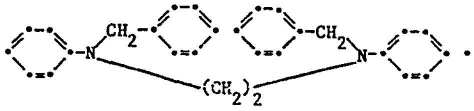

.

*Beispiel 19:*

Ein Gemisch, bestehend aus 120 g der Verbindung der Formel

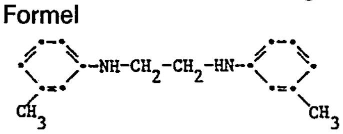

60 g Acrylnitril, 4 g Kupfer-(I)-chlorid und 150 ml Eisessig wird während 24 Stunden unter Rückfluss gerührt. Man entfernt hierauf die Essigsäure im Vakuum und behandelt den Rückstand mit einer 3%igen Lösung von Äthylendiamin in Wasser, worauf man den Rückstand zuerst mit Wasser, dann mit 2%iger Salzsäure und zuletzt nochmals mit Wasser bis zur neutralen Reaktion behandelt. Nach Trocknung im Vakuum bei 70° erhält man das Produkt der Formel

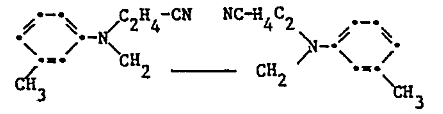

.

*Beispiel 20:*

Man rührt ein Gemisch, bestehend aus 120 g der Verbindung der Formel

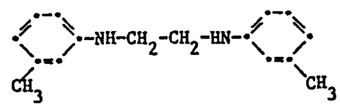

125 g Propansulfon-1,3, 40 g Magnesiumoxyd und 600 ml Äthylenglykolmonoäthyläther während 12 Stunden bei einer Temperatur von 110-115°, worauf man das Lösungsmittel im Vakuum möglichst vollständig entfernt. Man gibt zu dem Rückstand 1 l Wasser und hierauf Salzsäure, um Reste von Magnesiumsalzen zu lösen, stellt hierauf durch Zugabe von Kalilauge den pH-Wert auf ca. 5 und fällt das Produkt der Formel

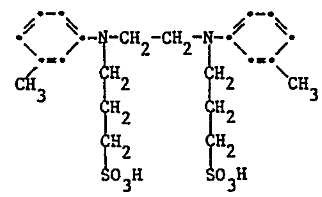

als Kaliumsalz aus, welches sich in Wasser farblos löst.

*Beispiel 21:*

In ein Gemisch, bestehend aus 23,5 g 20%igem Oleum und 53 g 98%iger Schwefelsäure, trägt man bei einer Temperatur von 15° 44,8 g der Verbindung der Formel

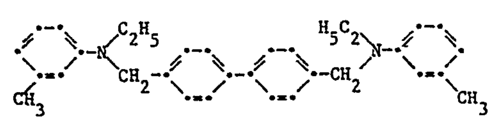

ein, worauf man das Gemisch auf 10° kühlt und bei dieser Temperatur 42 g 65%iges Oleum zugibt. Man erhöht nun die Temperatur auf 20-22° und rührt noch 2 Stunden bei 20-22°, worauf man auf eine Mischung aus 180 g Eis und 75 ml Wasser giesst. Man erhitzt die erhaltene Lösung auf 80° und trägt ca. 170 g Calciumcarbonat ein bis zur neutralen Reaktion, verdünnt mit 350 ml Wasser, gibt 50 g Filterhilfsmittel (Diatomeenerde) zu und filtriert auf einer Nutsche, worauf man den Filterrückstand mit heissem Wasser nachwäscht. Die braune Lösung versetzt man hierauf bei 80° mit Soda, bis die Lösung pH 7-8 aufweist, worauf man durch eine Nutsche vom ausgefällten Calciumcarbonat abfiltriert. Das Filtrat wird im Vakuum zur Trockne eingedampft und der Rückstand im Vakuumschrank bei 70° nachgetrocknet. Man erhält das Produkt der Formel

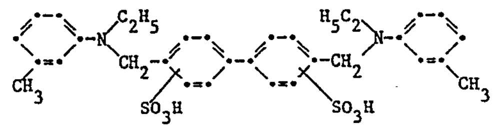

in Form seines Natriumsalzes als hell beigefarbenes Pulver, welches sich in Wasser leicht löst.

Verwendet man, bei ansonst gleichem Vorgehen, anstelle des oben aufgeführten Eduktes eine äquivalente Menge der Verbindung der Formel

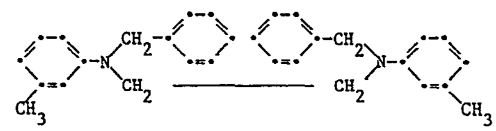

so erhält man die Verbindung der Formel

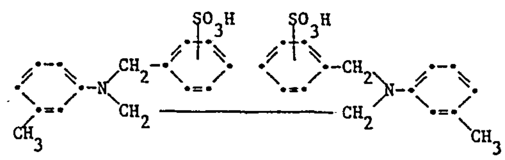

*Beispiel 22:*

Man löst 5,10 g 2,5-Dichloranilin-4-sulfosäure neutral in 60 ml Wasser, versetzt mit 5,25 ml 4N-Nitrilösung und giesst bei gutem Rühren auf ein Gemisch aus 60 g feinem Eis und 6 ml 36%iger Salzsäure. Nach vollständiger Diazotierung zerstört man den Nitritüberschuss mit Sulfaminsäure. Durch vorsichtige Zugabe von fester Soda bei 0-2° stellt man den pH-Wert der Diazosuspension auf 3. Dazu lässt man bei 0-2° eine Lösung von 3 g der Verbindung der Formel

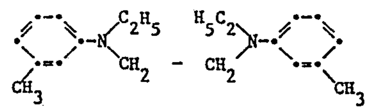

in 15 ml Essigsäure zutropfen, wobei man den pH-Wert durch Zugabe von Ammoniumacetat bei 3-4 hält. Nach vollständiger Kupplung stellt man den pH-Wert mit Natronlauge auf 5,5, erhitzt auf 55° und gibt 2 Vol.-% Kochsalz zu, worauf sich der Farbstoff nach kurzer Zeit als Natriumsalz abscheidet. Der so erhaltene Farbstoff der Formel

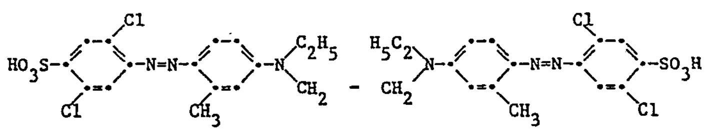

ist in Wasser leicht löslich mit roter Farbe. Die mit diesem Farbstoff bei pH 6 auf Polyamid erzeugten Färbungen besitzen sehr gute Nassechtheiten und eine gute Lichtechtheit. Der Ausziehgrad bei pH 6 und der Aufbau sind vorzüglich.

Verwendet man, bei ansonst gleichem Vorgehen, anstelle von 2,5-Dichloranilin-4-sulfosäure äquivalente Mengen der in der folgenden Tabelle 3 unter I aufgeführten Diazokomponenten D-$NH_2$, so erhält man nach Diazotierung und Kupplung derselben auf die im obigen Beispiel genannte Kupplungskomponente die Farbstoffe der Formel

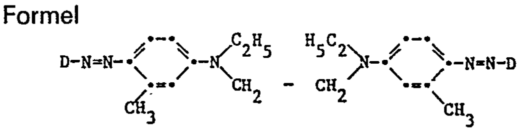

welche Polyamid bei pH 6 ebenfalls nass- und lichtecht färben.

*Tabelle 3*

| | I | II |
|---|---|---|
| Nr. | Diazokomponente (D)−$NH_2$ | Nuance auf Polyamid |
| 23 | 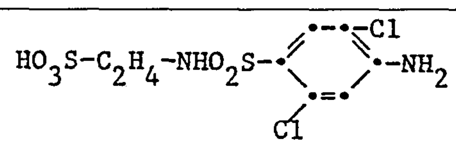 | blaustichig-rot |
| 24 | 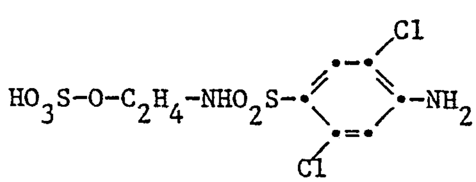 | do. |
| 25 | 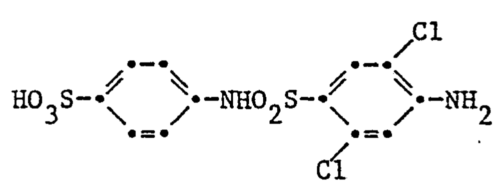 | do. |

*Tabelle 3* (Fortsetzung)

| | I | II |
|---|---|---|
| Nr. | Diazokomponente D−$NH_2$ | Nuance auf Polyamid |
| 26 | 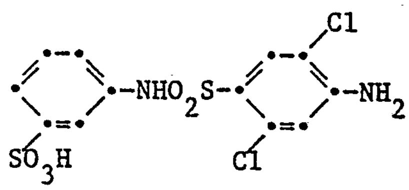 | do. |
| 27 | 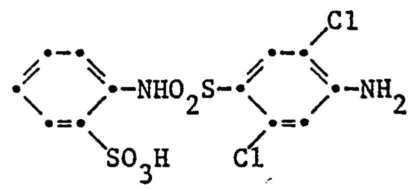 | do. |
| 28 | 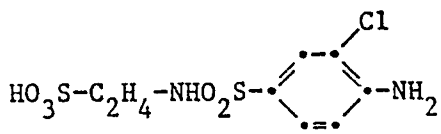 | rot |
| 29 | 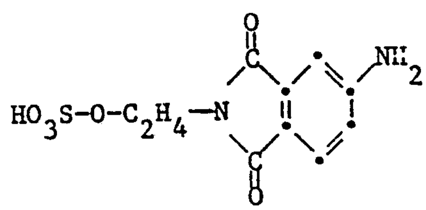 | rot |
| 30 | 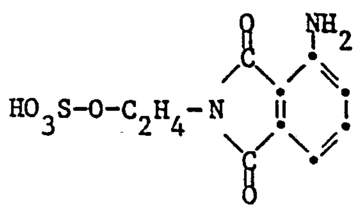 | do. |
| 31 | 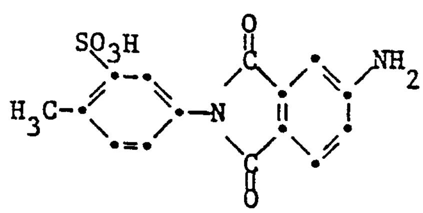 | do. |
| 32 | 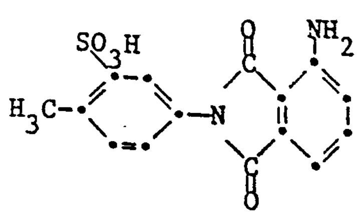 | do. |
| 33 | 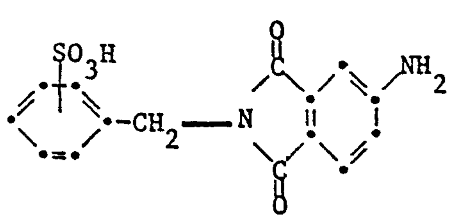 | do. |

*Tabelle 3* (Fortsetzung)

| | I | II |
|---|---|---|
| Nr. | Diazokomponente $D-NH_2$ | Nuance auf Polyamid |
| 34 | 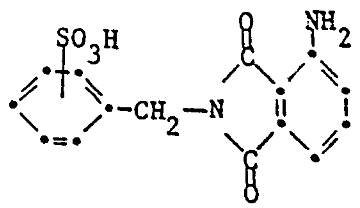 | do. |
| 35 | 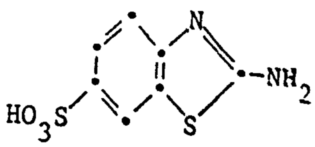 | blaustichig-rot |

*Beispiel 36:*

Verwendet man bei analogem Vorgehen als Kupplungskomponente die Verbindung der Formel

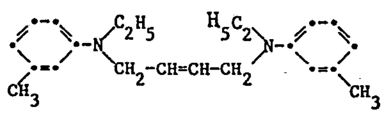

und die im Beispiel 29 genannte Diazokomponente, so erhält man den Farbstoff der Formel

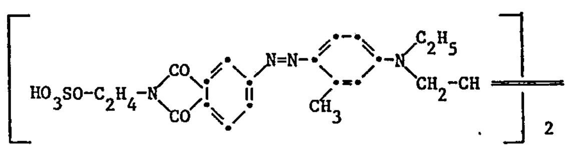

welcher Polyamid bei pH 6 in einem roten Farbton nass- und lichtecht färbt.

Verwendet man als Diazokomponente 2,5-Dichloranilin-4-sulfosäure und als Kupplungskomponente solche, welche in der folgenden Tabelle 4 aufgeführt sind, so erhält man bei sonst gleichem Vorgehen Farbstoffe der Formel

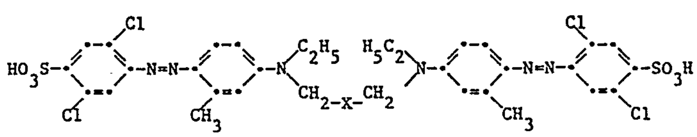

welche Polyamid bei pH 6 nass- und lichtecht färben.

*Tabelle 4*

| Nr. | 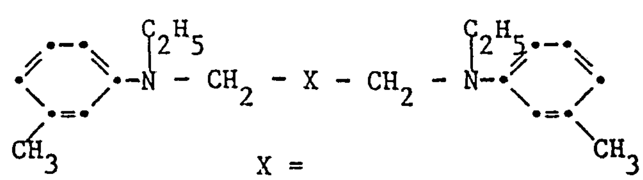 X = | Nuance auf Polyamid |
|---|---|---|
| 37 | $-CH_2-$ | rot |
| 38 | $CH_3$<br>\|<br>$-C-$<br>\|<br>$CH_2$ | do. |
| 39 | $-CH_2-CH-CH_2-$<br>\|<br>$CH_3$ | do. |

*Tabelle 4* (Fortsetzung)

| Nr. | 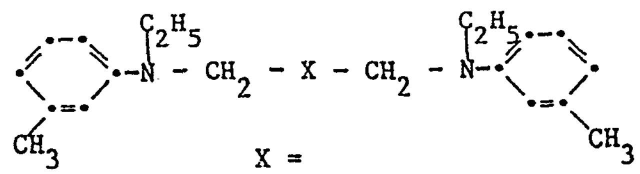 | Nuance auf Polyamid |
|---|---|---|
| 40 | $-CH=CH-$ | do. |
| 41 | $-CH_2-O-CH_2-$ | do. |
| 42 | 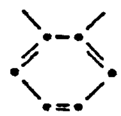 | do. |
| 43 | 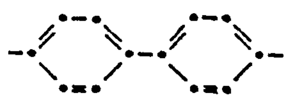 | do. |

Verwendet man als Kupplungskomponente eine äquivalente Menge der Verbindung der Formel

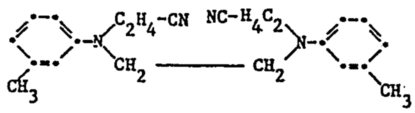

so erhält man bei im übrigen gleicher Arbeitsweise den Farbstoff der Formel

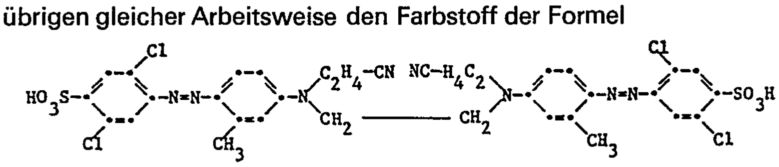

welcher Polyamid bei pH 6 nass- und lichtecht scharlachrot färbt.

*Beispiel 44:*

Man löst 10,3 g 5-Chloranilin-2,4-disulfonamid bei 50° in 40 ml Sulfolan, verdünnt mit 50 ml heissem Wasser und gibt 10 ml 36%ige Salzsäure zu. Nach Kühlung auf 2° diazotiert man mit 20 ml 4N-Nitrit. Man lässt noch 30 Minuten bei 0-2° nachrühren und zerstört einen Nitritüberschuss mit Sulfaminsäure.

Man löst nun 5 g der Verbindung der Formel

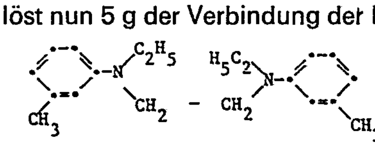

bei 50° in 50 ml Wasser unter Zusatz von 4 ml 36 %iger Salzsäure und lässt diese Lösung zur Diazolösung zutropfen, wobei man die Temperatur bei 8° hält. Man lässt anschliessend noch 17 Stunden bei Raumtemperatur nachrühren, erwärmt auf 50°, filtriert den ausgefallenen Farbstoff ab und wäscht mit 200 ml Wasser nach. Man schlämmt das Nutschgut in 200 ml Wasser an, erwärmt auf 45° und stellt den pH-Wert der Mischung mit konz. Natronlauge auf 7,4. Man versetzt mit 2,5 Vol.-% Kochsalz und 70 ml 95%igem Alkohol, worauf man den ausgefällten Farbstoff abfiltriert, mit 150 ml 5%iger Kochsalzlösung nachwäscht und anschliessend bei 70° im Vakuum trocknet.

Der so erhaltene Farbstoff der Formel

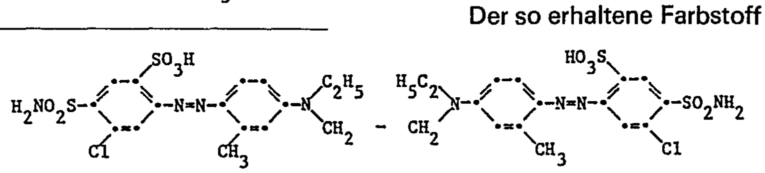

löst sich in Wasser mit roter Farbe. Die mittels dieses Farbstoffs bei pH 6 auf Polyamid erzeugten roten Färbungen sind gut licht- und nassecht.

Verwendet man bei ansonst gleichem Vorgehen anstelle der oben aufgeführten Kupplungskomponente äquivalente Mengen der in der folgenden Tabelle 5 verwendeten Kupplungskomponenten, so erhält man Farbstoffe der Formel

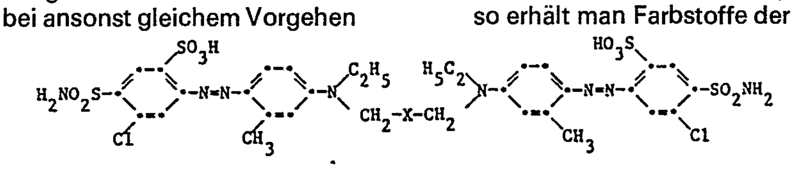

mit ähnlichen Eigenschaften.

*Tabelle 5*

| Nr. | 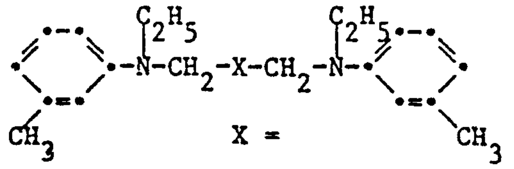 X = | Kupplungskomponente | Nuance auf Polyamid |
|---|---|---|---|
| 45 | $-CH_2-$ | | rot |
| 46 | 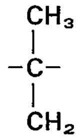 | | do. |
| 47 | 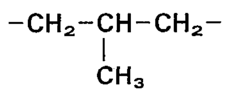 | | do. |
| 48 | $-CH{=}CH-$ | | do. |
| 49 | $-CH_2-O-CH_2-$ | | do. |
| 50 | 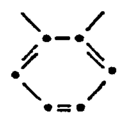 | | do. |
| 51 | 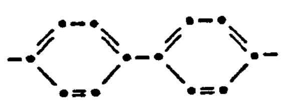 | | do. |

*Beispiel 52:*

Man gibt 2/100 Mol Diazoverbindung von 2,5-Dichloranilin-4-sulfäthylamin als wässerige Suspension, deren pH-Wert man mit Soda auf 3 gestellt hat, bei 0-5° zu einer Lösung von 1/100 Mol der Verbindung der Formel

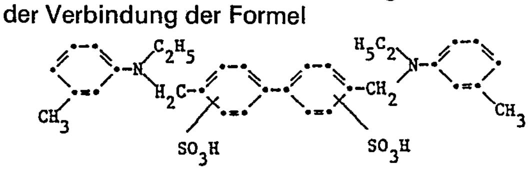

in Form ihres Natriumsalzes gelöst in 100 ml Wasser. Man kuppelt bei 0-5°, wobei man den pH-Wert bei 3-4 hält, stellt anschliessend den pH-Wert mit Natronlauge auf 7 und isoliert den Farbstoff in üblicher Weise durch Aussalzen mit Natriumchlorid. Der erhaltene Farbstoff der Formel

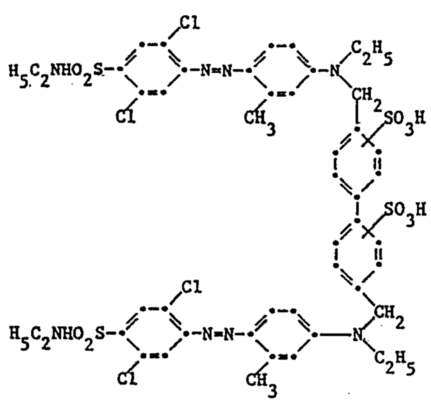

färbt Polyamid bei pH 6 nass- und lichtecht blaustichig-rot.

Verwendet man bei ansonst gleichem Vorgehen anstelle der oben aufgeführten Kupplungskomponente äquivalente Mengen der Kupplungskomponente der Formel

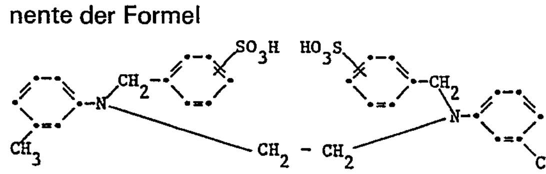

so erhält man den Farbstoff der Formel

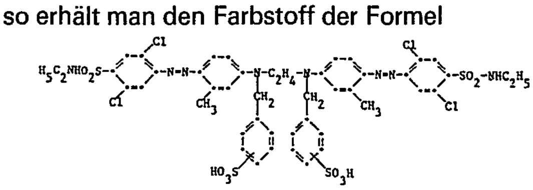

welcher ähnliche Eigenschaften aufweist.

Verwendet man bei sonst gleichem Vorgehen eine äquivalente Menge der Kupplungskomponente der Formel

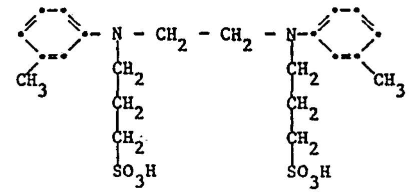

so erhält man den Farbstoff der Formel

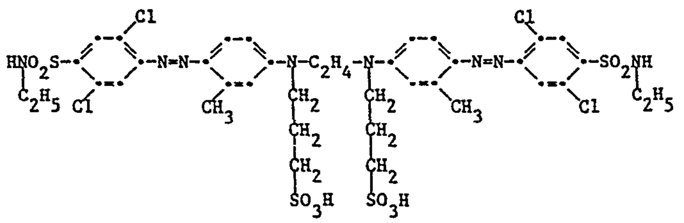

welcher Polyamid bei pH 6 aus wässerigem Bad nass- und lichtecht blaustichig-rot färbt.

Verwendet man bei sonst gleichem Vorgehen wie in obigen Beispielen anstelle von 2,5-Dichloranilin-4-sulfäthylamid eine äquivalente Menge der Diazoniumverbindung des 2-Aminobenzthiazols, so erhält man die entsprechenden Farbstoffe der Formeln

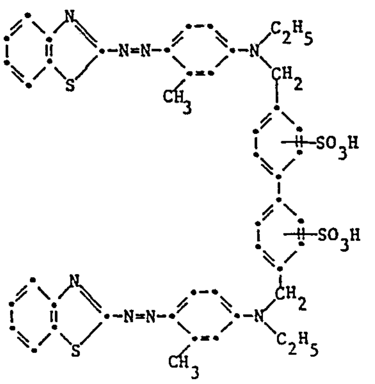

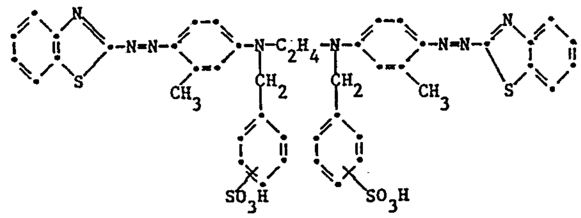

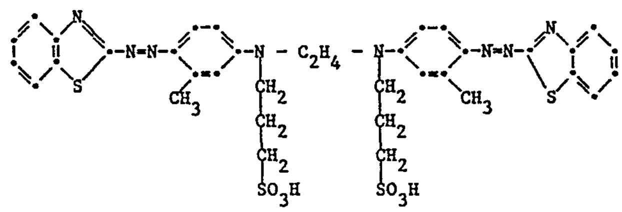

welche Polyamid bei pH 6 echt blaustichig-rot färben.

*Beispiel 53:*

Man löst 1/100 Mol der Verbindung der Formel

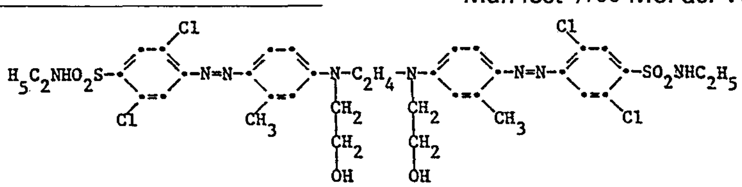

erhalten durch Diazotieren von 2,5-Dichloranilin-4-sulfäthylamin und Kupplung auf die Verbindung der Formel

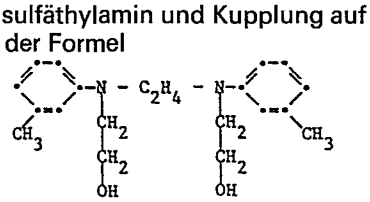

in 40 ml Pyridin, versetzt mit 4 g Chlorsulfonsäure und rührt anschliessend das Gemisch während 8 Stunden bei einer Temperatur von 68-70°. Nach Erkalten versetzt man mit wenig Wasser, gibt 6 g Natriumbicarbonat hinzu und destilliert das Pyridin im Vakuum bei 40-50° Badtemperatur ab. Zum Rückstand gibt man 300 ml Wasser, stellt den pH-Wert auf 7 und scheidet den Farbstoff bei 60° mit Kochsalz als Öl ab, welches man isoliert und anschliessend im Vakuum von anhaftendem Wasser bei 70° befreit. Der so erhaltene Farbstoff der Formel

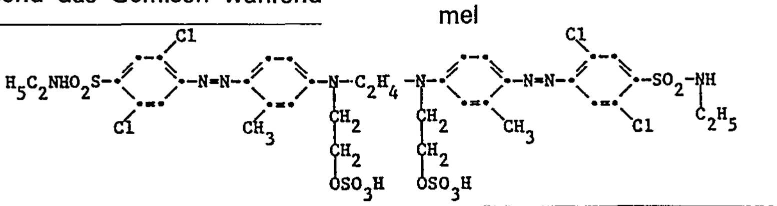

löst sich leicht in Wasser mit roter Farbe. Die mit Hilfe dieses Farbstoffs bei pH 6 auf Polyamid erzeugten roten Färbungen sind gut nass- und lichtecht.

Verwendet man anstelle des voraufgenannten Disazofarbstoffs den gleichen Farbstoff, der jedoch keine Methylgruppe in den Benzolkernen der Kupplungskomponente aufweist, so erhält man bei analogem Vorgehen durch Umsetzen mit Chlorsulfonsäure den Farbstoff der Formel

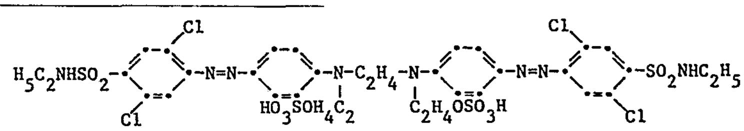

welcher Polyamid bei pH 6 in einem roten Farbton licht- und nassecht färbt.

*Beispiel 54:*

Man rührt ein Gemisch, bestehend aus 55 g N-Äthyl-N-chloräthylanilin, 162 g N-Äthyl-m-toluidin und 6 g Magnesiumoxyd während 2 Stunden bei einer Temperatur von 148-150°, wobei man bei vermindertem Druck gebildetes Wasser in eine Vorlage abdestilliert. Man lässt erkalten, filtriert von Magnesiumsalzen ab und unterwirft das Filtrat einer Destillation im Feinvakuum, wobei das gebildete Produkt der Formel

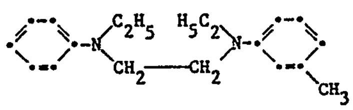

Kp. 0,1 mmHg/138-148°

als zähes Öl anfällt.

Verwendet man, bei ansonst gleichem Vorgehen, anstelle von N-Äthyl-m-toluidin eine äquivalente Menge N-Äthylanilin, so erhält man das Produkt der Formel

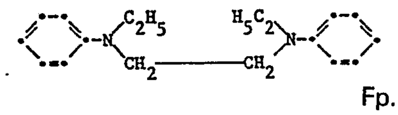

Fp. 75-78°

*Beispiele 55-65:*

Kuppelt man (an der Stelle →) die in der folgenden Tabelle 6 aufgeführten Diazokomponenten D-$NH_2$ in üblicher Weise im sauren pH-Bereich auf die Kupplungskomponente der Formel

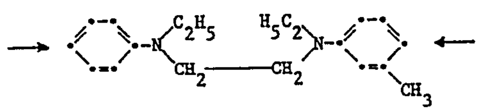

so erhält man Disazofarbstoffe, welche Polyamid bei pH 6 mit sehr gutem Ausziehgrad färben. Die erhaltenen Färbungen besitzen hohe Nassechtheiten.

*Tabelle 6*

| Nr. | Diazokomponenten D−$NH_2$ | Nuance auf Polyamid |
|---|---|---|
| 55 | 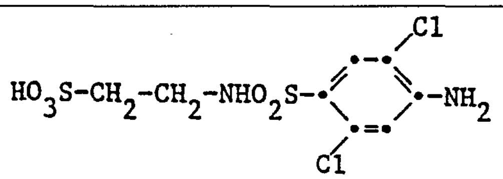 | rot |
| 56 | 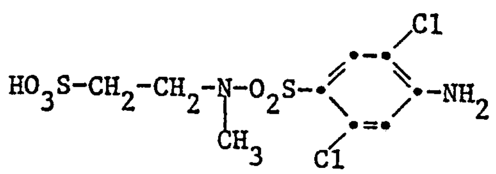 | rot |
| 57 | 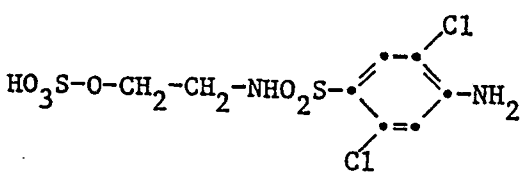 | do. |
| 58 | 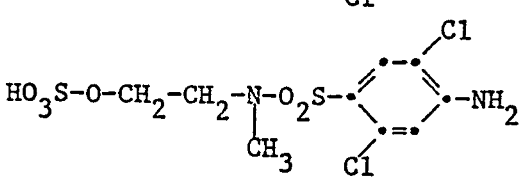 | do. |
| 59 | 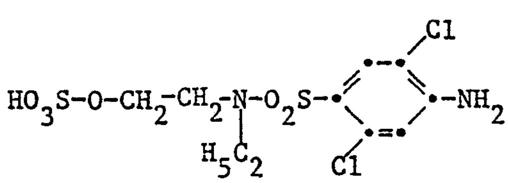 | do. |
| 60 | 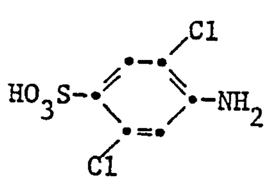 | do. |

*Tabelle 6* (Fortsetzung)

| Nr. | Diazokomponenten D−NH₂ | Nuance auf Polyamid |
|---|---|---|
| 61 | 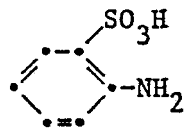 | gelb |
| 62 | 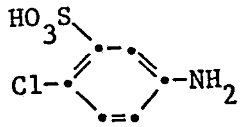 | gelb |
| 63 | 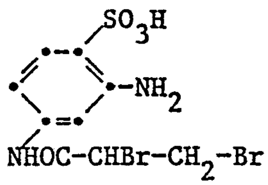 | do. |
| 64 | 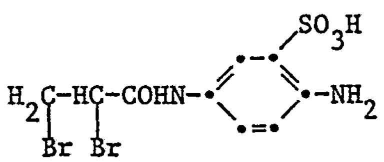 | rotstichig-gelb |

*Beispiele 65-76:*

Verwendet man bei analogem Vorgehen wie in den Beispielen 55-64 die Kupplungskomponente der Formel

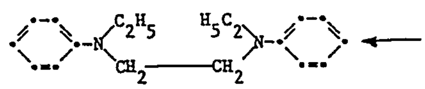

so erhält man unter Verwendung der in der Tabelle 7 angegebenen Diazokomponenten Disazofarbstoffe mit ähnlichen Eigenschaften.

*Tabelle 7*

| Nr. | Diazokomponenten | Nuance auf Polyamid |
|---|---|---|
| 65 | 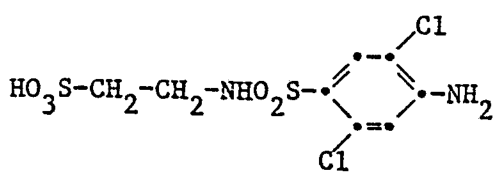 | rot |
| 66 | 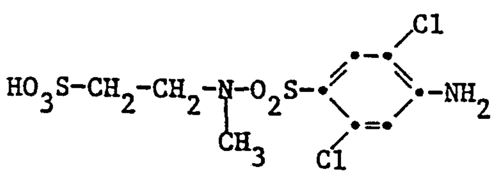 | do. |
| 67 | 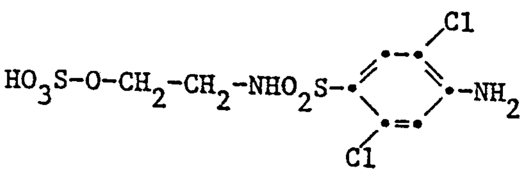 | do. |

*Tabelle 7* (Fortsetzung)

| Nr. | Diazokomponenten | Nuance auf Polyamid |
|---|---|---|
| 68 | 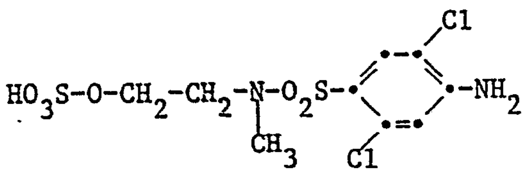 | do. |
| 69 | 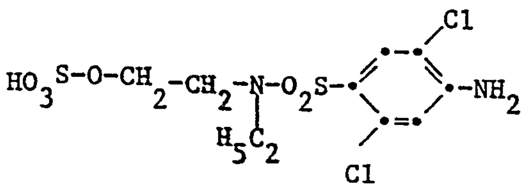 | do. |
| 70 | 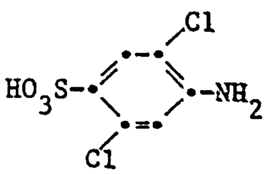 | gelbstichig-rot |
| 71 | 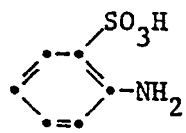 | gelb |
| 72 | 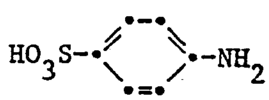 | gelb |
| 73 | 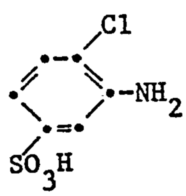 | do. |
| 74 | 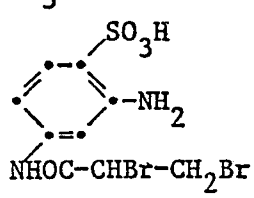 | do. |
| 75 | 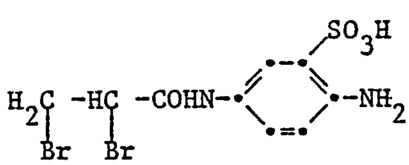 | rotstichig-gelb |

*Beispiel 76:*

2/100 Mol der Diazoniumverbindung von 2,5-Dichloranilin-4-sulfosäure kuppelt man bei einer Temperatur von 0-2° und einem pH-Wert von 3-4 mit 1/100 Mol der Verbindung der Formel

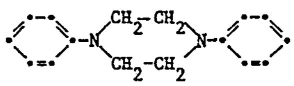

Fp 121°

(dargestellt nach „J. Amer. Chem. Soc.", *40,* 1429 [1918] bzw. „Ber.", *22,* 1778) und isoliert anschliessend den gebildeten Farbstoff der Formel

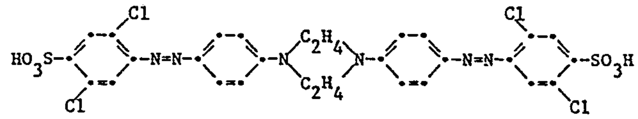

als Natriumsalz, welches ein rotes, in Wasser mit roter Farbe lösliches Pulver bildet.

Der Farbstoff weist, bei pH 6 auf Polyamid gefärbt, einen sehr hohen Ausziehgrad auf. Die erhaltenen roten Färbungen sind gut nass- und lichtecht.

Verwendet man, bei ansonst gleichem Vorgehen, anstelle von 2,5-Dichloranilin-4-sulfosäure äquivalente Mengen der in der folgenden Tabelle 8 aufgeführten Diazokomponenten D-$NH_2$, so erhält man Disazofarbstoffe der Formel

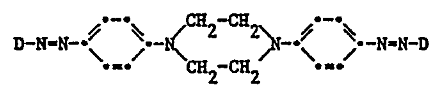

welche Polyamid bei pH 6 ebenfalls mit sehr guten Nassechtheiten färben.

*Tabelle 8*

| Nr. | Diazokomponenten D−$NH_2$ | Nuance auf Polyamid |
|---|---|---|
| 77 | 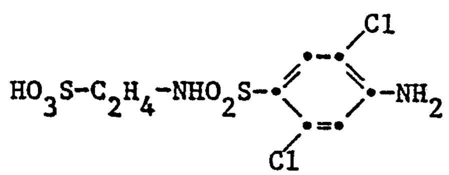 | rot |
| 78 | 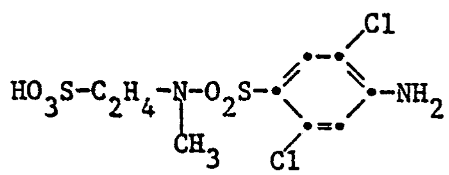 | do. |
| 79 | 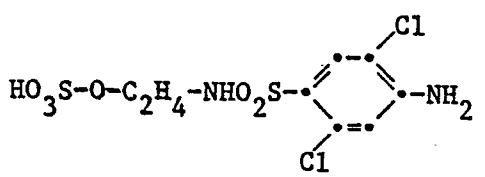 | do. |
| 80 | 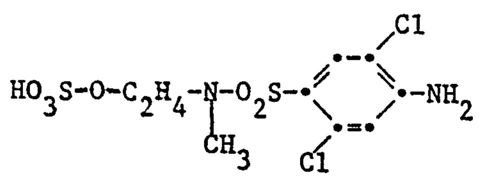 | do. |

*Beispiel 81:*

Verwendet man die Kupplungskomponente der Formel

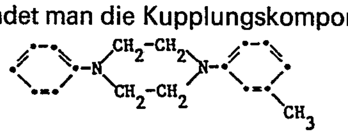

und kuppelt auf diese 2 Äquivalente diazotierte 2,5-Dichloranilin-4-sulfosäure, so erhält man den Farbstoff der Formel

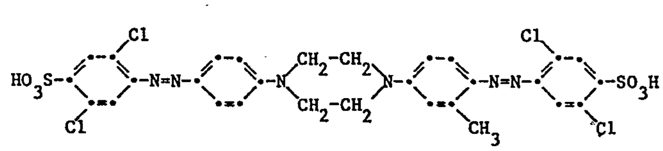

welcher Polyamid bei pH 6 mit sehr guten Nassechtheiten rot färbt.

Verwendet man anstelle der oben aufgeführten Kupplungskomponente äquivalente Mengen der Kupplungskomponente der Formel

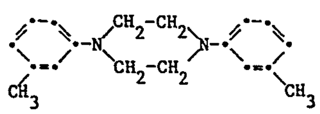

Kp. 0,2 mmHg/175-184°

*Elementaranalyse:*

ber.: C 81,16 H 8,33 N 16,52%

gef.: C 80,83 H 8,63 N 10,89%

(dargestellt nach „J. Amer. Chem. Soc." *40*, 1429 [1918] bzw. „Ber.", *22*, 1778 unter Verwendung

von m-Toluidin anstelle von Anilin), so erhält man unter Verwendung der in der folgenden Tabelle 9 aufgeführten Diazokomponenten D-$NH_2$ Disazofarbstoffe der Formel

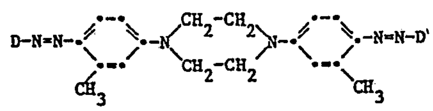

welche Polyamid bei pH 6 ebenfalls mit hohem Ausziehgrad und guten Nassechtheiten anfärben.

*Tabelle 9*

| Nr. | Diazokomponenten D−$NH_2$ | Nuance auf Polyamid |
|---|---|---|
| 82 | 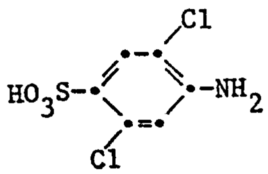 | rot |
| 83 | 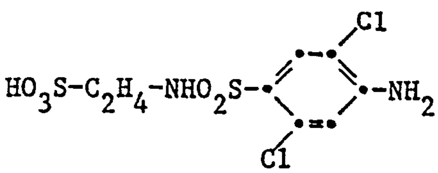 | do. |
| 84 | 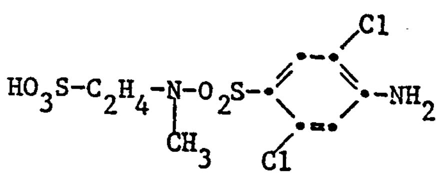 | do. |
| 85 | 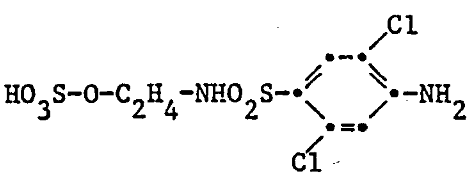 | rot |
| 86 | 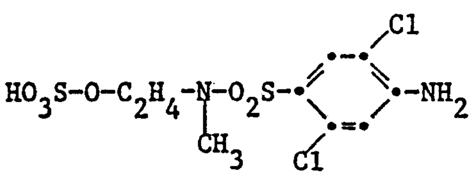 | do. |

*Beispiel 87:*

*A) 1. Diazotierung*

1,73 g Ortanilsäure werden in 25 ml Wasser mit Natronlauge bei pH 7 gelöst und mit 2,5 ml Natriumnitrit 4N versetzt. Die Lösung wird zu einer Mischung von 25 g Eis und 2,5 ml konzentrierter Salzsäure getropft. Die erhaltene Diazolösung lässt man etwas nachrühren und zerstört einen eventuell vorhandenen Nitritüberschuss mit Sulfaminsäure.

*B) Kupplung zum Monoazofarbstoff*

2,82 g des Umsetzungsproduktes von N-Äthyl-m-toluidin mit N-Äthyl-N-(2-chloräthyl)anilin löst man in 25 ml Wasser unter Zusatz von 3 ml konzentrierter Salzsäure und tropft diese Lösung zur oben hergestellten Diazolösung A). Man lässt einige Zeit kalt nachrühren und stellt dann mit Natriumacetat 4N einen konstanten pH-Wert von 4 ein. Der ausgefallene Monoazofarbstoff wird filtriert und mit Wasser gewaschen.

*C) 2. Diazotierung*

3,27 g 2-Amino-4'-methyldiphenylsulfon-4-sulfosäure wird in gleicher Weise diazotiert wie Ortanilsäure unter A).

*D) Kupplung zum Disazofarbstoff*

Die unter B) erhaltene Paste des Monoazofarbstoffes wird in 100 ml Wasser mit Natronlauge bei

pH 7 gelöst. Die Diazosuspension C) wird in Portionen zugegeben. Zur Reaktionsmischung werden 5 ml Pyridin zugegeben, worauf man über Nacht bei Raumtemperatur nachrührt. Zur Isolation des Farbstoffes stellt man mit konzentrierter Salzsäure auf ca. pH 0,5 und filtriert; dann wird die Paste in 100 ml Wasser mit Natronlauge bei pH 7 in Lösung gebracht und anschliessend zur Trockne eingedampft.

Man erhält 6,26 g eines scharlachroten Farbpulvers der Formel

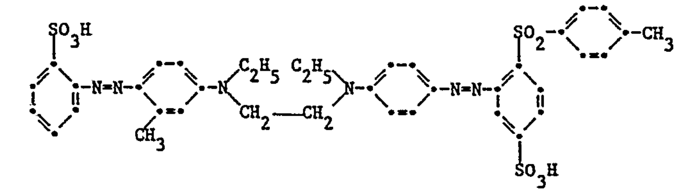

Der Farbstoff hat auf Polyamid ein vorzügliches Aufbauvermögen und besitzt gute Allgemeinechtheiten.

*Beispiel 88:*

*A) 1. Diazotierung*

1,73 g Ortanilsäure diazotiert man wie unter Beispiel 87 A).

*B) Kupplung zum Monoazofarbstoff*

2,68 g N,N'-Diäthyl-N,N'-diphenyldiaminoäthan werden in 30 ml Wasser unter Zusatz von 3 ml konzentrierter Salzsäure gelöst und der oben hergestellten Diazolösung zugefügt. Man lässt 1 Tag bei 40-45° nachrühren und filtriert den so erhaltenen Monoazofarbstoff ab.

*C) 2. Diazotierung*

3,27 g 2-Amino-4'-methyldiphenylsulfon-4-sulfosäure wird analog diazotiert wie Ortanilsäure im Beispiel 87 A).

*D) Kupplung zum Disazofarbstoff*

Die unter B) erhaltene Paste des Monoazofarbstoffes wird in 100 ml Wasser mit Natronlauge bei pH 9 gelöst und mit 10 ml Natriumacetatlösung 4N versetzt. Nach Zugabe der Disazosuspension C) lässt man eine Weile nachrühren und stellt dann mit Natronlauge auf pH 7. Die klärfiltrierte Lösung wird mit 15 g Kaliumchlorid versetzt, das ausgefällte Produkt filtriert und getrocknet. Man erhält 4,95 g eines rotstichig orangen Farbpulvers der Formel

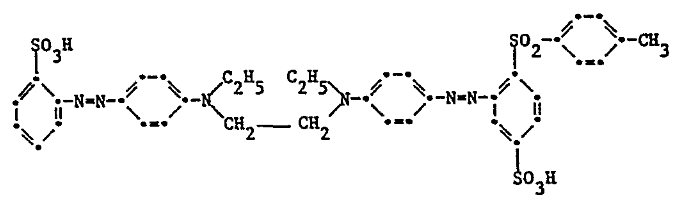

*Beispiel 89:*

Man bereitet ein Färbebad aus 4000 Teilen Wasser, 4 Teilen Ammoniumacetat, 2 Teilen des Farbstoffes gemäss Beispiel 22 und soviel Essigsäure, dass der pH-Wert des Bades 6 beträgt. In das erhaltene Färbebad geht man mit 100 Teilen eines synthetischen Polyamidtricots ein, erhitzt es innerhalb einer halben Stunde zum Kochen und färbt 45 Minuten bei 100°. Man erhält eine rote Färbung mit guten Nassechtheiten.

*Beispiel 90:*

100 Teile Wollstrickgarn werden bei 50° in ein Färbebad eingeführt, das auf 4000 Teile Wasser 2 Teile des Farbstoffs des Beispiels 22, 4 Teile Ammoniumsulfat und 2 Teile eines Egalisierhilfsmittels enthält. Die Flotte wird im Verlaufe von 45 Minuten zum Sieden gebracht und während weiteren 45 Minuten bei Kochtemperatur gehalten. Darauf wird das Färbegut herausgenommen, mit kaltem Wasser gründlich gespült und getrocknet. Man erhält eine rote Wollfärbung mit guten Echtheitseigenschaften.

*Beispiel 91:*

2 g Farbstoff gemäss Beispiel 62 werden in 100 ml heissem Wasser gelöst, kurz aufgekocht und direkt in einem Foulard mit einer Flottenaufnahme von 70-80% auf 10 g Baumwollsatin merc., gebl. aufgeklotzt.

Das mit Farbstoff imprägnierte Baumwollsatin wird anschliessend im Trockenschrank bei 70° getrocknet.

Zum Fixieren des Farbstoffes werden 200 ml Wasser enthaltend 6 g Glaubersalz kalz. auf 95° erhitzt. In der auf 95° gebrachten, wässerigen Glaubersalzlösung wird das getrocknete, mit Farbstoff imprägnierte Baumwollsatin 30 Minuten unter Beibehaltung der Temperatur von 95° unter ständiger Bewegung des Gewebes behandelt.

Anschliessend wird die Färbung in stehendem Bad mit heissem und kaltem Wasser gespült und bei 190° gebügelt. Man erhält eine gelbe Baumwollfärbung mit guten Echtheitseigenschaften.

## Patentansprüche

1. Disazoverbindungen der Formel I

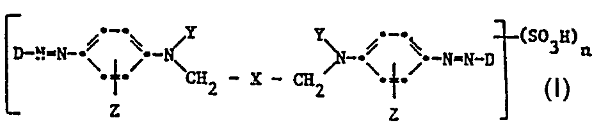

(I)

worin bedeuten
D unabhängig voneinander den Rest einer aromatischen oder heterocyclischen Diazokomponente, Z unabhängig voneinander Wasserstoff oder einen $C_1$-$C_4$-Alkylrest oder einen Acylaminorest, Y Wasserstoff oder einen gegebenenfalls substituierten $C_1$-$C_6$-Alkylrest, X entweder die direkte Bindung oder $-CH_2-$, $-CH_2-CH(CH_3)-CH_2-$, $-C(CH_3)_2-$, $-CH{=}CH-$, $-CH_2-O-CH_2$,

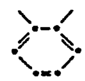 oder 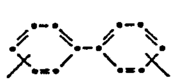, und

n die Zahlen 2 bis 6, vorzugsweise 2, wobei der Substituent Y im Falle eines gegebenenfalls substituierten $C_1$-$C_6$-Alkylrestes auch mit der o-Stellung zum N-Atom des Phenylenrestes zu einem 6-Ring gebunden sein kann oder beide Y-Substituenten können miteinander zu einer Alkylenbrükke verbunden sein.

2. Disazoverbindungen gemäss Anspruch 1, dadurch gekennzeichnet, dass die beiden Diazokomponenten D identisch sind.

3. Disazoverbindungen gemäss Anspruch 1, dadurch gekennzeichnet, dass die beiden Substituenten Z identisch sind.

4. Disazoverbindungen gemäss Anspruch 1, dadurch gekennzeichnet, dass D den Rest einer aromatischen Diazokomponente darstellt.

5. Disazoverbindungen gemäss Anspruch 1, dadurch gekennzeichnet, dass der Substituent Z einen $C_1$-$C_4$-Alkylrest darstellt.

6. Disazoverbindungen gemäss Anspruch 5, dadurch gekennzeichnet, dass der Substituent Z den $-CH_3$-Rest darstellt.

7. Disazoverbindungen gemäss Anspruch 1, dadurch gekennzeichnet, dass X die direkte Bindung bedeutet.

8. Disazoverbindungen gemäss Anspruch 1, dadurch gekennzeichnet, dass Y eine unsubstituierte Alkylgruppe bedeutet.

9. Disazoverbindungen gemäss Anspruch 8, dadurch gekennzeichnet, dass Y die $-C_2H_5$-Gruppe bedeutet.

10. Disazoverbindungen gemäss Anspruch 1 der Formel

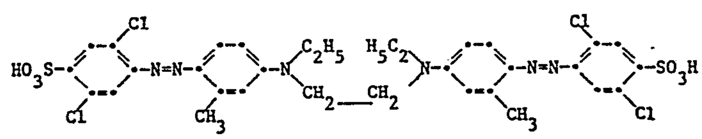

11. Disazoverbindungen gemäss Anspruch 1 der Formel

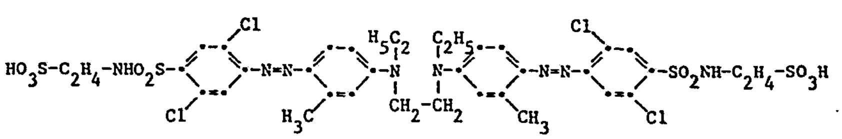

12. Disazoverbindungen gemäss Anspruch 1 der Formel

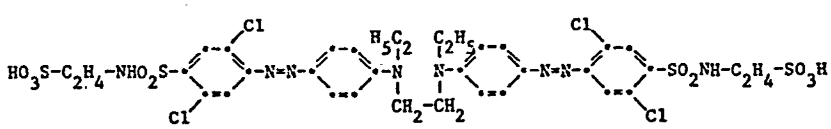

13. Verfahren zur Herstellung von Disazoverbindungen der Formel I gemäss Anspruch 1, dadurch gekennzeichnet, dass man 2 Mol einer Diazokomponente der Formel II $D-NH_2$ mit 1 Mol einer Kupplungskomponente der Formel III

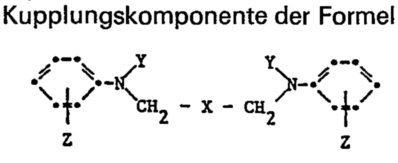 (III)

in welchen Formeln II und III die Symbole D, Z, Y und X die unter Formel I angegebene Bedeutung haben, kuppelt, wobei die Ausgangsverbindungen II und III so gewählt werden, dass die erhaltenen Azoverbindungen der Formel I 2 bis 6 $SO_3H$-Gruppen enthalten, und/oder dass man Ausgangsverbindungen der Formeln II und III ohne $SO_3H$-Gruppen verwendet und nach der Kupplungsreaktion das Kupplungsprodukt sulfiert.

14. Verwendung der Disazoverbindungen gemäss den Ansprüchen 1 bis 12 oder der gemäss dem Anspruch 13 erhaltenen Disazoverbindungen als saure Farbstoffe zum Färben und Bedrucken von natürlichen und synthetischen Textilmaterialien.

15. Verwendung gemäss Anspruch 14 zum Färben und Bedrucken von Polyamid- und Wollmaterialien.

16. Die mittels den Disazoverbindungen der Formel I gemäss Anspruch 1 gefärbten und bedruckten natürlichen und synthetischen Textilmaterialien.

17. Zwischenprodukte der Formel IV

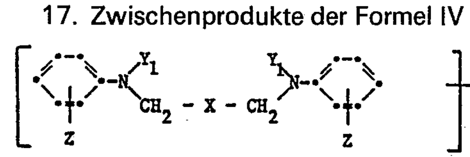 (IV)

worin bedeuten
Z unabhängig voneinander Wasserstoff oder einen $C_1$-$C_4$-Alkylrest oder eine Acylaminogruppe, $Y_1$

Wasserstoff oder einen gegebenenfalls substituierten $C_1$-$C_6$-Alkylrest, X entweder die direkte Bindung

oder $-CH_2-$, $-CH_2-\underset{CH_3}{\underset{|}{CH}}-CH_2-$, $-\overset{CH_3}{\overset{|}{\underset{CH_3}{\underset{|}{C}}}}-$,

$-CH{=}CH-$,

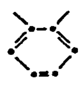 oder 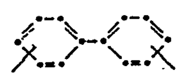, und

m die Zahlen 0 bis 2, wobei der Substituent $Y_1$ im Falle eines gegebenenfalls substituierten $C_1$-$C_6$-Alkylrestes auch an die o-Stellung zum N-Atom des Phenylrestes zu einem 6-Ring gebunden sein kann.

## Claims

1. Disazo compounds of the formula I

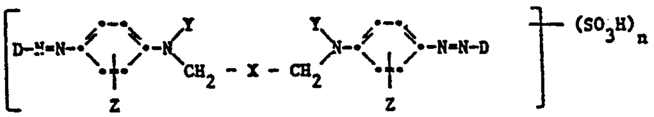 (I)

wherein each D independently of the other is the radical of an aromatic or heterocyclic diazo component, each Z independently of the other is hydrogen or a $C_1$-$C_4$-alkyl group or an acylamino group, Y is hydrogen or an unsubstituted or substituted $C_1$-$C_6$-alkyl group, X is either the direct bond or $-CH_2-$, $-CH_2-\underset{CH_3}{\underset{|}{CH}}-CH_2-$, $-\overset{CH_3}{\overset{|}{\underset{CH_3}{\underset{|}{C}}}}-$,

$-CH{=}CH-$, $-CH_2-O-CH_2$,

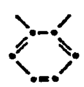 or 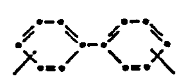, and

n is a number from 2 to 6, preferably 2; and the substituent Y, in the case of an unsubstituted or substituted $C_1$-$C_6$-alkyl group, can be bonded to the o-position relative to the N atom of the phenylene group to form a six-membered ring, or both Y substituents can be linked together to form an alkylene bridge.

2. Disazo compounds according to Claim 1, wherein the two diazo components D are identical.

3. Disazo compounds according to Claim 1, wherein the two substituents Z are identical.

4. Disazo compounds according to Claim 1, wherein D is the radical of an aromatic diazo component.

5. Disazo compounds according to Claim 1, wherein the substituent Z is a $C_1$-$C_4$-alkyl group.

6. Disazo compounds according to Claim 5, wherein the substituent Z is the $-CH_3$ group.

7. Disazo compounds according to Claim 1, wherein X is the direct bond.

8. Disazo compounds according to Claim 1, wherein Y is an unsubstituted alkyl group.

9. Disazo compounds according to Claim 8, wherein Y is an unsubstituted alkyl group.

9. Disazo compounds according to Claim 8, wherein Y is the $-C_2H_5$ group.

10. Disazo compounds according to Claim 1 of the formula

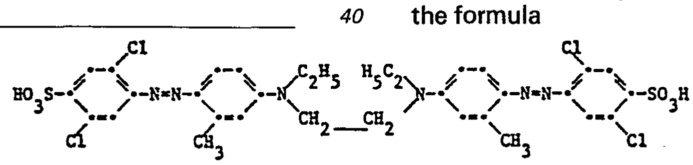

11. Disazo compounds according to Claim 1 of the formula

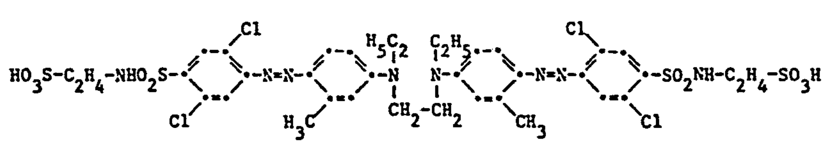

12. Disazo compounds according to Claim 1 of the formula

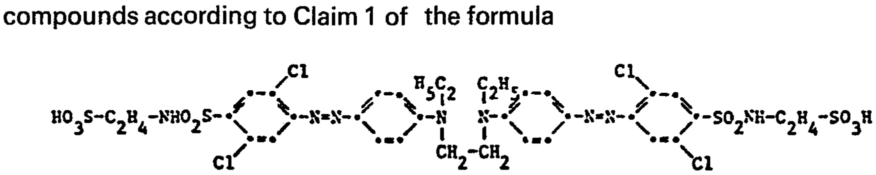

13. Process for producing disazo compounds of the formula I according to Claim 1, which process comprises coupling 2 mols of a diazo component of the formula II $D-NH_2$ with 1 mol of a coupling component of the formula III

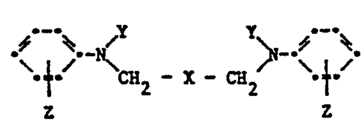 (III),

in which formulae II and III, the symbols D, Z, Y and X have the meanings defined under the formula I, the procedure being such that starting compounds II and III are used which yield azo compounds of the formula I containing two to six $SO_3H$ groups, and/or that starting compounds II and III are used which have no $SO_3H$ group, in which case the coupling product is sulfonated after the coupling reaction.

14. Use of the disazo compounds according to Claims 1 to 12, or of the disazo compounds obtained according to Claim 13, as acid dyes for dyeing and printing natural and synthetic textile materials.

15. Use according to Claim 14 for dyeing and printing polyamide and wool materials.

16. The natural and synthetic textile materials dyed and printed by means of the disazo compounds of the formula I according to Claim 1.

17. Intermediates of the formula IV

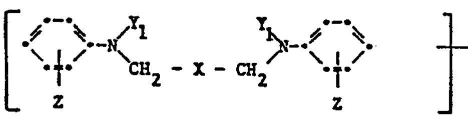
(IV)

wherein each Z independently of the other is hydrogen or a $C_1$-$C_4$-alkyl group or an acylamino group, $Y_1$ is hydrogen or an unsubstituted or substituted $C_1$-$C_6$-alkyl group, X is either the double bond or $-CH_2-$, $-CH_2-CH(CH_3)-CH_2-$, $-C(CH_3)_2-$, $-CH=CH-$,

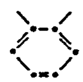 or 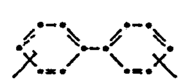, and

m is a number from 0 to 2, and the substituent $Y_1$, in the case of an unsubstituted or substituted $C_1$-$C_6$-alkyl group, can also be bonded to the o-position relative to the N atom of the phenyl group to form a six-membered ring.

## Revendications

1. Composés disazoïques de formule I

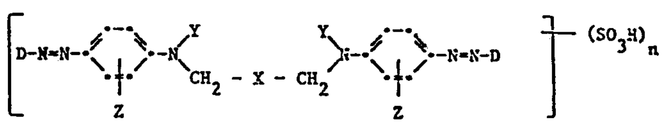
(I)

où les radicaux D, indépendamment l'un de l'autre, sont le résidu d'un composant diazoïque aromatique ou hétérocyclique, les radicaux Z, indépendamment l'un de l'autre, sont l'hydrogène ou un radical alkyle en $C_1$-$C_4$ ou un radical acylamino, Y est hydrogène ou un radical alkyle en $C_1$-$C_6$ éventuellement substitué, X est une liaison directe ou $-CH_2-$, $-CH_2-$, $-CH_2-CH(CH_3)-CH_2-$, $-C(CH_3)_2-$, $-CH=CH-$, $-CH_2-O-CH_2$,

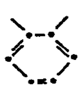 ou 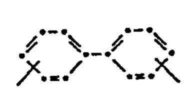, et

n représente les nombres 2 à 6, de préférence 2, le substituant Y, dans le cas d'un radical alkyle en $C_1$-$C_6$ éventuellement substitué, pouvant être aussi lié en position ortho par rapport à l'atome N du radical phénylène pour donner un noyau hexagonal, ou bien les deux substituants Y peuvent ensemble être liés pour donner un pont alkylène.

2. Composés disazoïques selon la revendication 1, caractérisés en ce que les deux composants diazoïques D sont identiques.

3. Composés disazoïques selon la revendication 1, caractérisés en ce que les deux substituants Z sont identiques.

4. Composés disazoïques selon la revendication 1, caractérisés en ce que D représente le résidu d'un composant diazoïque aromatique.

5. Composés disazoïques selon la revendication 1, caractérisés en ce que le substituant Z est un radical alkyle en $C_1$-$C_4$.

6. Composés disazoïques selon la revendication 5, caractérisés en ce que le substituant Z représente le radical $-CH_3$.

7. Composés disazoïques selon la revendication 1, caractérisés en ce que X signifie une liaison directe.

8. Composés disazoïques selon la revendication 1, caractérisés en ce que Y est un groupe alkyle non substitué.

9. Composés disazoïques selon la revendication 8, caractérisés en ce que Y représente le groupe $-C_2H_5$.

10. Composés disazoïques selon la revendication 1, de formule

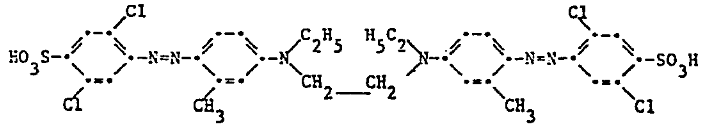

11. Composés disazoïques selon la revendication 1, de formule

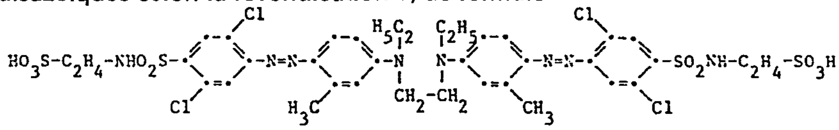

12. Composés disazoïques selon la revendication 1, de formule

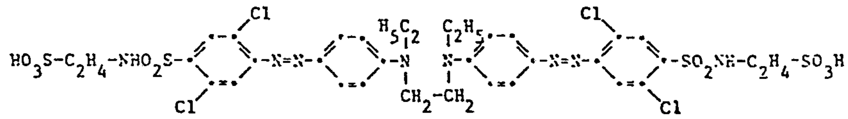

13. Procédé pour la préparation de composés disazoïques de formule I selon la revendication 1, caractérisé en ce qu'on copule 2 moles d'un composant diazoïque de formule II D-$NH_2$ avec 1 mole d'un composant de copulation de formule III

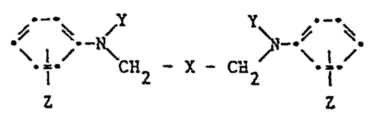 (III)

formules II et III dans lesquelles les symboles D, Z, Y et X ont la signification donnée à propos de la formule I, les composés de départ II et III étant choisis de façon que les composés azoïques obtenus de formule I contiennent 2 à 6 groupes $SO_3H$ et/ou que l'on utilise des composés de départ de formules II et III sans groupes $SO_3H$ et qu'on sulfone le produit de copulation après la réaction de copulation.

14. Utilisation des composés disazoïques selon les revendications 1 à 12, ou des composés disazoïques obtenus selon la revendication 13, en tant que colorants acides pour la teinture et l'impression de matières textiles naturelles ou synthétiques.

15. Utilisation selon la revendication 14 pour la teinture et l'impression de matières en polyamide et laine.

16. Les matières textiles naturelles et synthétiques teintes et imprimées à l'aide des composés disazoïques de formule I selon la revendication 1.

17. Produits intermédiaires de formule IV

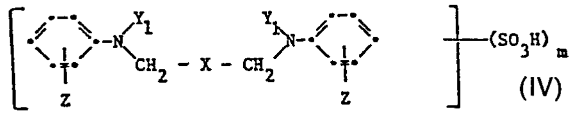 (IV)

où les radicaux Z, indépendamment l'un de l'autre, sont l'hydrogène ou un radical alkyle en $C_1$-$C_4$ ou un groupement acylamino, $Y_1$ est l'hydrogène ou un radical alkyle en $C_1$-$C_4$ ou un groupement acylamino, $Y_1$ est l'hydrogène ou un radical alkyle en $C_1$-$C_6$ éventuellement substitué, X est une liaison directe, ou $-CH_2-$, $-CH_2-\underset{CH_3}{\underset{|}{CH}}-CH_2-$, $-\overset{CH_3}{\overset{|}{\underset{CH_3}{\underset{|}{C}}}}-$, $-CH=CH-$,

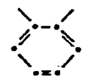 ou 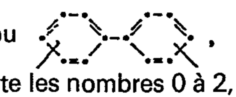, et

m représente les nombres 0 à 2, le substituant $Y_1$, dans le cas d'un radical alkyle en $C_1$-$C_6$ éventuellement substitué, pouvant aussi être lié en position ortho par rapport à l'atome de N du radical phényle pour donner un noyau hexagonal.